# EUROPEAN PATENT SPECIFICATION

(11) **EP 3 837 953 B1**
(45) Date of publication and mention of the grant of the patent: **14.06.2023**
(21) Application number: 20212811.2
(22) Date of filing: 09.12.2020
(51) Int. Cl.: A01D 34/66, A01D 34/86, A01D 75/28, A01B 63/10, A01D 57/20

(54) **AGRICULTURAL APPARATUS**
LANDWIRTSCHAFTLICHE VORRICHTUNG
APPAREIL AGRICOLE

(30) Priority: 19.12.2019 GB 201918842
(43) Date of publication of application: 23.06.2021
(73) Proprietor: AGCO International GmbH, 8212 Neuhausen am Rheinfall (CH)
(72) Inventor: Fillep, Johannes, 90537 Feucht (DE); Kinast, Ronnie, 90537 Feucht (DE)
(74) Representative: AGCO Intellectual Property Department

(56) References cited:
- EP-A1- 2 769 613
- EP-A2- 1 040 751
- DE-A1-102010 010 862
- US-A1- 2018 153 101
- US-A1- 2019 124 844

## Description

### FIELD OF THE INVENTION

The present invention relates to an agricultural apparatus comprising an agricultural vehicle and a number of work units suitable for generating swathes of cut crop, and in particular to a mowing apparatus for cutting a standing crop such as hay.

### BACKGROUND

It is known to provide a mower combination in which a first mower unit is located ahead of an agricultural vehicle such as a tractor with two further lateral mower units trailing the agricultural vehicle. The rear mower units can optionally be provided with conveyors for depositing cut crop into a swath or swathes behind the agricultural vehicle.

During operation each of the lateral mower units are suspended from a central frame unit by suitably located hydraulic units. The hydraulic unit may be used to move the mower units from a working position to a transport position. A headland position may be defined between the working position and the transport position. In the working position the height of the lateral mower units above the ground surface may be further controlled by operation of the hydraulic units.

The mower units may be provided with rollers or runners to rest on the ground to be mowed. Ideally the mower units are supported so that the weight of the mower units is not on the ground surface or turf being cut. This is achieved by adjusting the relief pressure in the hydraulic units to reduce the bearing force of the mower unit. The higher the pressure relief the lower the bearing force. However in the case of varying terrain, due to hydraulic unloading the mower units do not follow the terrain contour resulting in an unclean cut. Also, the low contact pressures and high speed of operation of the mower units leads to an uneven cut since the mower units do not adapt to the terrain contour due to inertia in the hydraulic relief system.

It is an advantage of the present invention that these problems are addressed.

It is known from EP 2 769 613 A to provide a an agricultural apparatus comprising an agricultural vehicle and a number of work units suitable for cutting a standing crop, the work units being connected to the agricultural vehicle, the number of work units including a front work unit and two lateral work units located behind and to the sides of the front work unit, each of the work units configured to deposit the cut crop as a swath, each of the lateral work units being supported from a central chassis by a hydraulic system, the agricultural apparatus further comprising a control unit and a plurality of sensors.

Other advantages of the present invention will become apparent as discussed below.

### SUMMARY OF THE INVENTION

According to the present invention, an agricultural apparatus comprises an agricultural vehicle and a number of work units suitable for cutting a standing crop, the work units being connected to the agricultural vehicle, the number of work units including a front work unit and two lateral work units located behind and to the sides of the front work unit, each of the work units configured to deposit the cut crop as a swath, each of the lateral work units being supported from a central chassis by a hydraulic system, the agricultural apparatus further comprising a control unit and a plurality of sensors, the sensors configured to determine a speed of the agricultural vehicle, a speed of operation of each lateral work unit and a relief pressure in the hydraulic system of each lateral work unit, the control unit being configured to receive inputs from the plurality of sensors, compare the values for a desired vehicle speed or speed of operation of the work unit and adjusting the pressure relief in the hydraulic system based on this comparison, wherein the agricultural apparatus further includes a plurality of sensors to detect an overload condition in each of the work units, the control unit compares a speed of operation of each work unit before and after an overload protection and the speed of the agricultural vehicle and adjusts the speed of the agricultural vehicle based on this comparison .

This has as an advantage that when an increase in speed is detected, the inertia of the hydraulic control system can be compensated for and the work units are able to follow the terrain contour, resulting in an even cut. Similarly if a decrease in speed is detected the bearing pressure can be reduced.

More preferably the plurality of sensors comprises a plurality of sensors configured to measure the torque of the PTO driving the front and rear work units.

Preferably a threshold value for the speed of operation of each work unit is set such that the agricultural vehicle may not speed up until such threshold value has been reached.

Preferably a maximum torque value may be stored such that if the maximum torque value is exceeded then the controller is configured to reduce the operating speed of the work unit. Preferably a minimum torque value is stored such that if the minimum torque value is undershot, the controller is configured to reduce speed of operation of the work unit.

Preferably a hysteresis pattern may be stored allowing alteration of the speed of operation of the work unit in response to the detected torque of the PTO.

This has as an advantage that the operator no longer needs constantly to monitor the speed of the agricultural vehicle and the operating speeds of the work units thereby reducing the stress and tiredness of the operator.

### BRIEF DESCRIPTION OF THE DRAWINGS

The invention will now be described, by way of example only, with reference to the accompanying drawings, in which:
Figure 1 shows a plan view of an agricultural apparatus for use in the present invention;

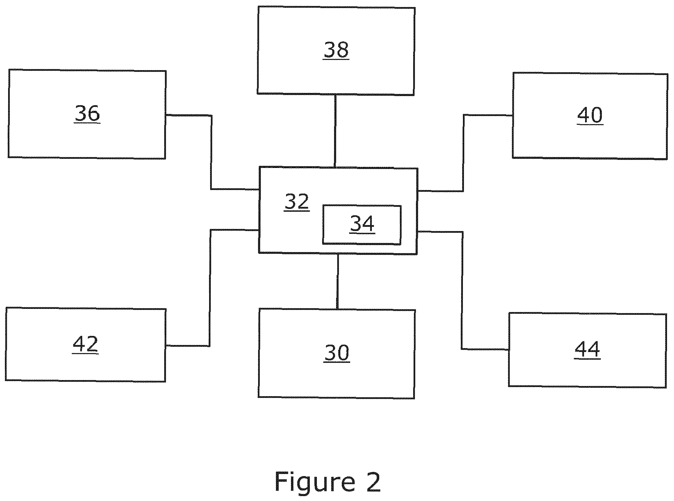

Figure 2 shows a schematic view of elements of an agricultural apparatus for use in the present invention;
Figure 3 shows a flow diagram illustrating an example load control method in accordance with the present invention; and
Figure 4 shows a flow diagram illustrating an example vehicle speed or work unit control method in accordance with the present invention.

### DETAILED DESCRIPTION OF SPECIFIC EMBODIMENTS OF THE INVENTION

The invention will now be described in the following detailed description with reference to the drawings, wherein preferred embodiments are described in detail to enable practice of the invention. Although the invention is described with reference to these specific preferred embodiments, it will be understood that the invention is not limited to these preferred embodiments. Within the scope of the appended claims, the invention includes numerous alternatives, modifications and equivalents as will become apparent from consideration of the following detailed description.

Reference to terms such as longitudinal, transverse and vertical are made with respect to a longitudinal vehicle axis which is parallel to a normal forward direction of travel.

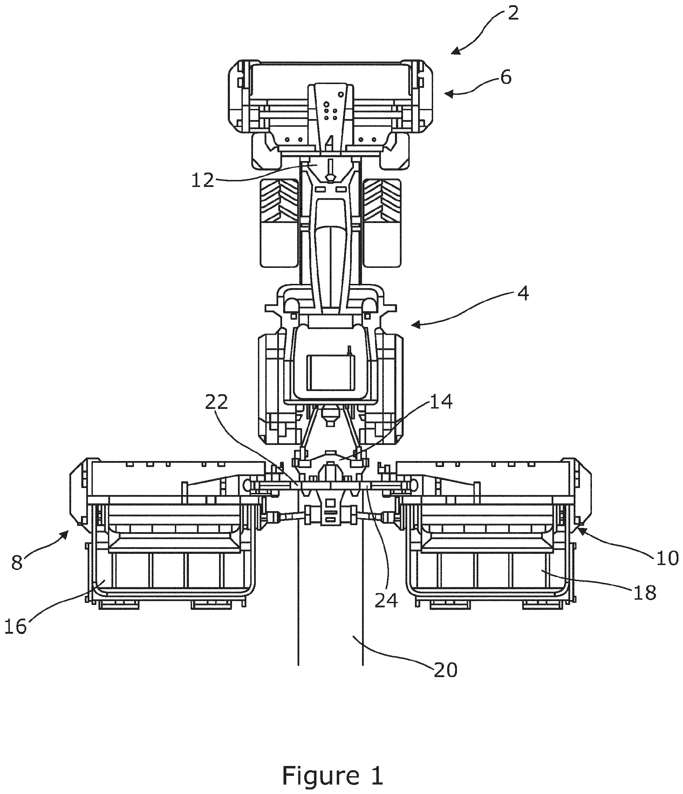

With reference to Figure 1, a plan view of an agricultural apparatus 2 for use in the present invention is shown.

An agricultural apparatus 2 comprises an agricultural vehicle 4 such as a tractor and a number of work units 6,8,10 suitable for cutting standing crop, the work units 6,8,10 being connected to the agricultural vehicle. The work units include a front work unit 6 located to the front of the agricultural vehicle 4 and two lateral work units 8,10 located behind and to the sides of the front work unit 6, each of the work units 6,8,10 depositing cut crop as a swath. The front work unit 6 is conveniently mounted on a front hitch 12 of the agricultural vehicle 4. The two lateral work units 8,10 are conveniently mounted on a central chassis supported from a rear hitch 14 of the agricultural vehicle 4. In a preferred embodiment the work units comprise mowing units.

The work units 6,8,10 may conveniently be driven from a PTO (Power Take Off) drive provided to the front and to the rear of the agricultural vehicle 2.

The lateral work units 8,10 are supported from a central chassis by hydraulic units 22,24. Each hydraulic unit 22,24 may be used to move a respective lateral work unit 8,10 from a working position to a transport position. A headland position may be defined between the working position and the transport position. In the working position the height of each of the lateral work units 8,10 above the ground surface may be further controlled by operation of the hydraulic units 22,24.

In the illustrated embodiment a swath 20 produced by the front work unit 6 is shown.

In practice conveyors 16,18 mounted to the rear of the lateral work units 8,10 will direct cut crop material to one side or the other of the respective lateral work units 8,10 to produce a broader central swath or one or more additional swathes as desired. These swathes are omitted from Figure 1 for clarity.

An operator can control operation of the front and rear work units 6,8,10 from within the agricultural vehicle 4 by use of a suitable user terminal 30. For example the operator can cause each of the work units 6,8,10 to move from a working position to a headland position, can cause the rear work units 8,10 to move from the working position to a transport position, or can cause the conveyors 16,18 to move from an active position to an inactive position.

The user terminal 30 communicates with an electronic control unit 32. The control unit 32 provides signals to control operation of the front and rear hitches 12,14 of the agricultural vehicle 4 and provides signals to control operation of the work units 6,8,10. Conveniently the signals are provided by way of a data communication network such as one compliant with the ISOBUS standard.

The control unit 32 may conveniently comprise a single processor located on the agricultural vehicle or its functions may be split between a processor located on the agricultural vehicle and one or more additional processors located on the work units, the additional processor(s) being in electronic communication with the first processor.

The control unit 32 is also able to access a suitable memory 34. The memory 34 may take any suitable form and is in electronic communication with the control unit 32. The memory 34 is adapted to store, in any suitable manner such as a database or look up table, a vehicle speed and/or the mower speed with respective target values for the relief pressure in each hydraulic unit 22,24.

The agricultural apparatus 2 further comprises a plurality of sensors including a sensor 36 for determining a speed of the agricultural vehicle, a sensor 38 for determining a speed of operation of each lateral mower unit and a sensor 40 for determining a relief pressure in the hydraulic system of each hydraulic unit.

The control unit is configured to receive inputs from the plurality of sensors 36,38,40 and to compare the values for a desired vehicle speed or speed of operation of the mower unit and, as required, adjusting the pressure relief in the hydraulic system based on this comparison.

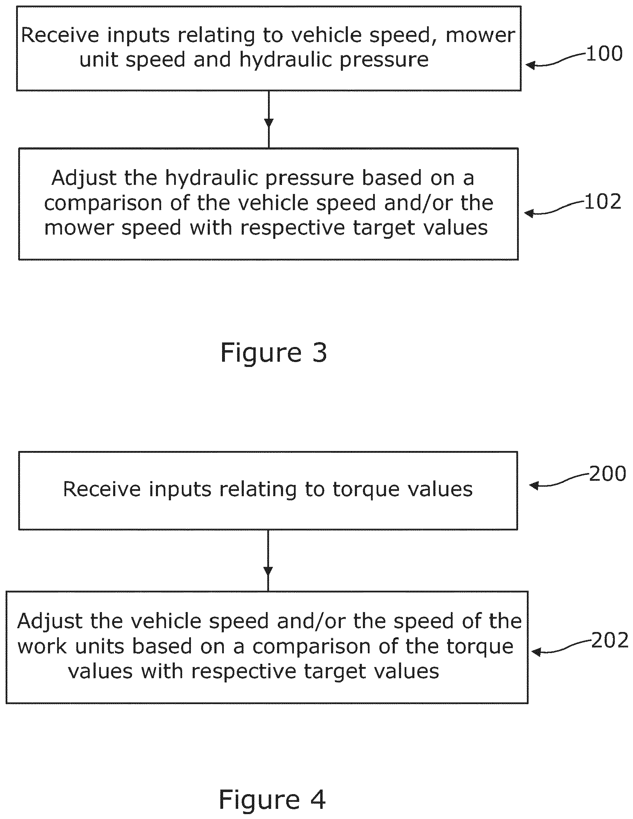

For example if the working speed increases, the control unit 32 detects the increase in in the speed signal (step 100 Figure 3) and adjusts the relief pressure in the hydraulic system to increase the contact pressure of the work unit (step 102). Because the contact pressure has been increased, the inertia of the hydraulic system can be compensated for and the work units will adapt to the terrain contour resulting in a clean cut.

Alternatively, when a decrease in speed is detected, the bearing pressure is reduced by adjusting the pressure relief in the hydraulic system accordingly. In this way, the control unit 32 is able to regulate the contact pressure according to the speed dependent operating parameters.

The agricultural apparatus 2 is further provided with a plurality of sensors 42,44 to detect an overload condition in each of the lateral work units 8,10. Conveniently the plurality of sensors 42,44 comprise sensors adapted to measure the torque of the PTO driving the front work unit and driving the rear work units. The control unit 32 receives inputs relating to torque values (step 200) and notes the detection of an overload condition corresponding to a change in torque values and compares a speed of operation of each work unit before and after the overload condition and the speed of the agricultural vehicle 4.

The control unit 32 is then able to adjust the speed of the agricultural vehicle 4 based on this comparison (step 202). In a preferred embodiment, the control unit 32 monitors the operating speed of the work units 8,10 and compares this value against a stored threshold value to ensure that a minimum threshold value for the speed of operation of the work units 8,10 has been achieved. Only when this condition has been met does the control unit 32 increase the speed of the agricultural vehicle 4.

A value for the maximum desired torque value may be stored. The control unit 32 is adapted to reduce the operating speed of the work unit 8,10 if the maximum desired torque value is met or exceeded. Additionally a value for the minimum desired torque value may be stored. The control unit 32 is adapted to increase the operating speed of the work unit 8,10 if the minimum desired torque value is met or exceeded. It can be seen that a hysteresis pattern may be stored allowing alteration of the operating speed of the work units 8,10 in response to changes in the detected torque of the work units 8,10.

From reading the present disclosure, other modifications will be apparent to persons skilled in the art. Within the scope of the appended claims, such modifications may involve other features which are already known in the field of mowers and component parts therefore and which may be used instead of or in addition to features already described herein.

## Claims

1. An agricultural apparatus (2) comprising an agricultural vehicle (4) and a number of work units (6,8,10) suitable for cutting a standing crop, the work units (6,8,10) being connected to the agricultural vehicle (4), the number of work units (6,8,10) including a front work unit (6) and two lateral work units (8,10) located behind and to the sides of the front work unit (6), each of the work units (6,8,10) configured to deposit the cut crop as a swath, each of the lateral work units (8,10) being supported from a central chassis by a hydraulic system, the agricultural apparatus (2) further comprising a control unit (32) and a plurality of sensors (36,38,40), **characterised in that**
the sensors are configured to determine a speed of the agricultural vehicle, a speed of operation of each lateral work unit (8,10) and a relief pressure in the hydraulic system of each lateral work unit (8,10), the control unit (32) being configured to receive inputs from the plurality of sensors (36,38,40), compare the values for a desired vehicle speed or speed of operation of the lateral work units (8,10) and adjusting the pressure relief in the hydraulic system based on this comparison,
wherein
the agricultural apparatus (2) further includes a further plurality of sensors (42,44) to detect an overload condition in each of the lateral work units (8,10), the control unit (32) being configured to compare a speed of operation of each lateral work unit (8,10) before and after an overload protection and the speed of the agricultural vehicle (4) and to adjust the speed of the agricultural vehicle (4) based on this comparison.

2. An agricultural apparatus according to claim 1, **characterised in that** the further plurality of sensors is configured to measure the torque of the PTO driving the front and rear work units (6,8,10).

3. An agricultural apparatus according to claim 1 or claim 2, **characterised in that** a threshold value for the speed of operation of each lateral work unit (8,10) is set such that the agricultural vehicle may not speed up until such threshold value has been reached.

4. An agricultural apparatus according to claim 3, **characterised in that** a maximum torque value may be stored such that if the maximum torque value is exceeded then the controller (32) is configured to reduce the operating speed of the lateral work unit (8,10).

5. An agricultural apparatus according to claim 3, **characterised in that** a minimum torque value is stored such that if the minimum torque value is undershot, then the controller (32) is configured to increase the speed of operation of the lateral work unit (8,10).

6. An agricultural apparatus according to claim 3, **characterised in that** a hysteresis pattern may be stored allowing alteration of the speed of operation of the lateral work unit (8,10) in response to the detected torque of the PTO.

## Patentansprüche

1. Landwirtschaftliche Einrichtung (2) mit einem landwirtschaftlichen Fahrzeug (4) und mehreren Arbeitseinheiten (6, 8, 10), die für ein Schneiden eines stehenden Ernteguts geeignet sind, wobei die Arbeitseinheiten (6, 8, 10) mit dem landwirtschaftlichen Fahrzeug (4) verbunden sind, die mehreren Arbeitseinheiten (6, 8, 10) eine vordere Arbeitseinheit (6) und zwei laterale Arbeitseinheiten (8, 10), die hinter und seitlich der vorderen Arbeitseinheit (6) angeordnet sind, aufweisen, jede Arbeitseinheit (6, 8, 10) zur Ablage des geschnittenen Ernteguts als Schwade konfiguriert ist, jede laterale Arbeitseinheit (8,10) mittels eines hydraulischen Systems an einem zentralen Chassis abgestützt ist und die landwirtschaftliche Einrichtung (2) des Weiteren eine Steuereinheit (32) und mehrere Sensoren (36, 38, 40) aufweist, **dadurch gekennzeichnet, dass** die Sensoren zur Ermittlung einer Geschwindigkeit des landwirtschaftlichen Fahrzeugs, einer Betriebsgeschwindigkeit jeder lateralen Arbeitseinheit (8, 10) und eines Drucks oder Entlastungsdrucks in dem hydraulischen System jeder lateralen Arbeitseinheit (8, 10) konfiguriert sind, wobei die Steuereinheit (32) konfiguriert ist für ein Empfangen von Eingängen von den mehreren Sensoren (36, 38, 40), für ein Vergleichen der Werte für eine gewünschte Geschwindigkeit des Fahrzeugs oder Betriebsgeschwindigkeit der lateralen Arbeitseinheiten (8, 10) und für ein Anpassen des Drucks oder Entlastungsdrucks in dem hydraulischen System auf Basis des Vergleichs, wobei die landwirtschaftliche Einrichtung (2) des Weiteren weitere mehrere Sensoren (42, 44) aufweist zur Detektierung eines Überlast-Zustands in jeder der lateralen Arbeitseinheiten (8, 10), wobei die Steuereinheit (32) geeignet konfiguriert ist für einen Vergleich einer Betriebsgeschwindigkeit jeder lateralen Arbeitseinheit (8, 10) vor und nach einem Überlast-Schutz und der Geschwindigkeit des landwirtschaftlichen Fahrzeugs (4) und für eine Anpassung der Geschwindigkeit des landwirtschaftlichen Fahrzeugs (4) auf Basis dieses Vergleichs.

2. Landwirtschaftliche Einrichtung nach Anspruch 1, **dadurch gekennzeichnet, dass** die weiteren mehreren Sensoren konfiguriert sind zur Messung des Moments der Leistungsabgabewelle oder PTO-Welle, die die mindestens vordere und mindestens eine hintere Arbeitseinheit (6, 8, 10) antreibt.

3. Landwirtschaftliche Einrichtung nach Anspruch 1 oder 2, **dadurch gekennzeichnet, dass** ein Schwellwert der Betriebsgeschwindigkeit jeder lateralen Arbeitseinheit (8, 10) derart vorgegeben wird, dass das landwirtschaftliche Fahrzeug keine Geschwindigkeiten aufnehmen kann, bis der Schwellwert erreicht worden ist.

4. Landwirtschaftliche Einrichtung nach Anspruch 3, **dadurch gekennzeichnet, dass** ein maximaler Momentenwert derart gespeichert werden kann, dass für den Fall, dass der maximale Momentenwert überschritten wird, der Kontroller (32) derart konfiguriert wird oder ist, dass die Betriebsgeschwindigkeit der lateralen Arbeitseinheit (8, 10) reduziert wird.

5. Landwirtschaftliche Einrichtung nach Anspruch 3, **dadurch gekennzeichnet, dass** ein minimaler Momentenwert derart gespeichert wird, dass für den Fall, dass der minimale Momentenwert unterschritten wird, der Kontroller (32) derart konfiguriert ist oder wird, dass die Betriebsgeschwindigkeit der lateralen Arbeitseinheit (8, 10) erhöht wird.

6. Landwirtschaftliche Einrichtung nach Anspruch 3, **dadurch gekennzeichnet, dass** ein Hysteresemuster gespeichert werden kann, welches eine Änderung oder einen Wechsel der Betriebsgeschwindigkeit der lateralen Arbeitseinheit (8 ,10) in Reaktion auf das detektierte Moment der Leistungsabgabewelle oder PTO-Welle ermöglicht.

## Revendications

1. Dispositif agricole (2) comprenant un véhicule (4) et un certain nombre d'unités opérationnelles (6, 8, 10) adaptées à la coupe d'une culture sur pied, les unités opérationnelles (6, 8, 10) étant couplées au véhicule agricole (4), les unités opérationnelles (6, 8, 10) comportant une unité opérationnelle avant (6) et deux unités opérationnelles latérales (8, 10) situées derrière et sur les côtés de l'unité opérationnelle avant (6), chacune des unités opérationnelles (6, 8, 10) étant configurée de manière à déposer la culture coupée en andain, chacune des unités opérationnelles latérales (8, 10) étant supportée à partir d'un châssis central par un dispositif hydraulique, le dispositif agricole (2) comprenant, en outre, une unité de commande (32) et une pluralité de capteurs (36, 38, 40), **caractérisé en ce que**
les capteurs sont configurés de manière à déterminer une vitesse du véhicule agricole, une vitesse de travail de chaque unité opérationnelle latérale (8, 10) et une pression de décharge dans le dispositif hydraulique de chaque unité opérationnelle latérale (8, 10), l'unité de commande (32) étant configurée de manière à recevoir des entrées à partir de la pluralité de capteurs (36, 38, 40), à comparer les valeurs pour une vitesse de véhicule ou vitesse de travail des unités opérationnelles latérales (8, 10) désirée et à régler la pression de décharge dans le dispositif hydraulique sur la base de cette comparaison, dans lequel le dispositif agricole (2) comprend, en outre, une pluralité de capteurs supplémentaires (42, 44) afin de détecter une condition de surcharge dans chacune des unités opérationnelles latérales (8, 10), l'unité de commande (32) étant configurée de manière à comparer une vitesse de travail de chaque unité opérationnelle latérale (8, 10) avant et après une opération de protection de surcharge et la vitesse du véhicule agricole (4) et à ajuster la vitesse du véhicule agricole (4) sur la base de cette comparaison.

2. Dispositif agricole selon la revendication 1, **caractérisé en ce que** la pluralité de capteurs supplémentaires est configurée de manière à mesurer le couple de la prise de force (PTO) entraînant les unités opérationnelle avant et arrière (6, 8, 10).

3. Dispositif agricole selon la revendication 1 ou 2, **caractérisé en ce qu'**une valeur de seuil de la vitesse de travail de chaque unité opérationnelle latérale (8, 10) est définie de telle sorte que le véhicule agricole ne peut pas accélérer tant qu'une telle valeur de seuil n'a été atteinte.

4. Dispositif agricole selon la revendication 3, **caractérisé en ce qu'**une valeur de couple maximum peut être mémorisée de telle sorte que si la valeur de couple maximum est dépassée, alors l'unité de commande (32) est configurée de manière à réduire la vitesse de travail de l'unité opérationnelle latérale (8, 10).

5. Dispositif agricole selon la revendication 3, **caractérisé en ce qu'**une valeur de couple minimum est mémorisée de telle sorte que si la valeur de couple minimum est dépassée par valeur inférieure, alors l'unité de commande (32) est configurée de manière à augmenter la vitesse de travail de l'unité opérationnelle latérale (8, 10).

6. Dispositif agricole selon la revendication 3, **caractérisé en ce qu'**un profil d'hystérésis peut être mémorisé permettant la modification de la vitesse de travail de l'unité opérationnelle latérale (8, 10) en réponse au couple détecté sur la prise PTO.
